# EUROPÄISCHE PATENTSCHRIFT

(11) **EP 1 977 957 B1**
(45) Veröffentlichungstag und Bekanntmachung des Hinweises auf die Patenterteilung: **13.04.2016**
(21) Anmeldenummer: 08002648.7
(22) Anmeldetag: 13.02.2008
(51) Int. Cl.: B62D 25/08, B60Q 1/04

(54) **Frontendmodul**
Front module and mounting method
Face Avant et procédé de montage

(30) Priorität: 05.04.2007 DE 102007016925
(43) Veröffentlichungstag der Anmeldung: 08.10.2008
(73) Patentinhaber: HBPO GmbH, 59557 Lippstadt (DE)
(72) Erfinder: Hemmersmeier, Ralf, Dipl.-Ing., 38415 Verl (DE); Schlüter, Sascha, Dipl.-Ing., 89346 Bühl-Biberfeld (DE); Bauer, Vitalij, 59597 Erwitte-Völlinghausen (DE)
(74) Vertreter: Ostermann, Thomas

(56) Entgegenhaltungen:
- EP-A1- 1 544 032
- EP-A1- 1 932 749
- EP-A1- 2 057 035
- EP-A1- 2 298 600
- EP-A2- 1 702 834
- DE-A1-102005 057 116

## Beschreibung

Die Erfindung betrifft ein Frontendmodul für Fahrzeuge nach dem Oberbegriff des Patentanspruches 1.

Aus der EP 1 232 932 B1 ist ein Frontendmodul für Fahrzeuge bekannt, das einen Montageträger mit einer Mehrzahl von Quer- und Vertikalstreben aufweist. An gegenüberliegenden Endbereichen des Montageträgers ist jeweils ein Scheinwerfer tragender Haltearm an einer Vertikalstrebe des Montageträgers befestigt. Um vorhandene Toleranzen bei der Montage des Modulträgers an dem Fahrzeug auszugleichen, ist der Haltearm elastisch ausgebildet. Wenn der Scheinwerfer zusammen mit dem Montageträger an dem Fahrzeug befestigt werden soll, reicht die elastische Verformbarkeit des Haltearms jedoch nicht aus, insbesondere dann nicht, wenn die Montage des Frontendmoduls in Richtung der Fahrzeuglängsachse erfolgen soll und ein die optischen Bauelemente des Scheinwerfers aufnehmendes Gehäuse einen Querschnitt aufweist, der vergleichbar ist mit der Größe einer Abschlussscheibe des Scheinwerfers, durch die eine vordere Öffnung des Scheinwerfergehäuses abgedeckt ist.

Aus der gattungsgemäßen EP 1 932 749 A1 ist ein Frontendmodul mit einem Montageträger, an dem ein Haltearm befestigbar ist bekannt. Der Haltearm trägt einen:Scheinwerfer. Zum Verbringen des Scheinwerfers in eine Justierposition weist der Haltearm einen Scharnierabschnitt auf, mittels dessen der Haltearm um eine vertikale Schwenkachse verschwenkbar ist. Ein lineares Verschieben des Haltearms ist nicht vorgesehen.

Die WO 2008/022904 A1 offenbart ein Frontendmodul für Fahrzeuge mit einem Montageträger, an dem ein Haltearm befestigbar ist, der einen Scheinwerfer trägt. Zum Verschieben des Haltearms quer zur Fahrzeuglängsachse sind elastische Federmittel vorgesehen, die in Querrichtung nachgiebig und damit verformbar ausgestaltet sind.

Ferner offenbart die EP 1 702 834 A2 ein Frontendmodul für Fahrzeuge mit einem Montageträger, der mit einem einen Scheinwerfer tragenden Haltearm über ein elastisches Element verbunden ist. Das elastische Element ermöglicht ein federndes Verschieben des Haltearms quer zur Fahrzeuglängsachse.

Aus der EP 1 544 032 A1 ist weiterhin ein Frontendmodul für Fahrzeuge mit einem Montageträger bekannt, der einen Haltearm umfasst, an dem ein Scheinwerfer befestigt ist.

Der Scheinwerfer ist an dem Haltearm mittels einer Ritzel-Zahnstangen-Verbindung quer zur Fahrzeuglängsachse verschiebbar angeordnet..

Aufgabe der vorliegenden Erfindung ist es daher, ein Frontendmodul derart weiterzubilden, dass der Montageaufwand für ein mit einem Scheinwerfer bestücktes Frontendmodul verringert wird, wobei die Montage im Wesentlichen in Richtung einer Fahrzeuglängsachse erfolgt und wobei an dem Fahrzeug bereits ein in der Montagestellung an den Scheinwerfer angrenzendes Seitenteil montiert ist.

Zur Lösung dieser Aufgabe weist die Erfindung die Merkmale des Patentanspruches 1 auf.

Der besondere Vorteil des erfindungsgemäßen Frontendmoduls besteht darin, dass das Frontendmodul zusammen mit an demselben montierte Scheinwerfer an das Fahrzeug befestigt werden kann, wobei sichergestellt ist, dass der Scheinwerfer eine vorgegebene Konturierung relativ zu einem benachbarten Seitenteil des Fahrzeugs aufweist. Dadurch, dass der Haltearm quer zur Fahrzeuglängsachse zwischen einer Vormontageposition und einer Justierposition verschiebbar gelagert ist, kann zum einen eine sichere Positionierung des Frontendmoduls an dem Fahrzeug gewährleistet werden, in der sich der Scheinwerfer in einer vorgegebenen Ausnehmung des Fahrzeugs befindet. Vorzugsweise kann das Frontendmodul in Richtung der Fahrzeuglängsachse bewegt werden, bis der Montageträger zusammen mit den Scheinwerfern eine vorgegebene Einbaulage, in der sich der Montageträger senkrecht zur Fahrzeuglängsachse erstreckt, erreicht hat. Dies kann erfolgen, ohne die Gefahr des Zusammenstoßes des Scheinwerfers mit einem in der Endmontageposition unmittelbar an demselben angrenzenden Seitenteil des Fahrzeugs. Erst durch Verschieben des Haltearmes aus der Vormontageposition in eine Justierposition, in der der Haltearm relativ zu dem Montageträger ausrichtbar ist, kann eine Endposition desselben eingestellt werden, in der der Scheinwerfer eine vorgegebene Konturierung zu dem angrenzenden Seitenteil aufweist. Vorteilhaft kann somit eine Montage des Frontendmoduls an dem Fahrzeug erfolgen, ohne dass ein unerwünschter Zusammenstoß zwischen dem Scheinwerfer und dem Seitenteil des Fahrzeugs eintritt. Nach der Erfindung umfassen die Befestigungsmittel eine Lasche, die eine schlüssellochförmige Ausnehmung aufweist und die mit einem Befestigungsbolzen zusammenwirkt, der in die Ausnehmung der Lasche eingreift.

Nach einer bevorzugten Ausführungsform des Frontendmoduls ist der Haltearm über solche Befestigungsmittel an einer Strebe des Montageträgers gehalten, dass er in der Vormontageposition mit einem relativ geringen Spiel an der Strebe und in der Justierposition mit einem relativ großem Spiel an der Strebe festlegbar ist. Hierdurch wird eine definierte Relativlage des Haltearms zu dem Montageträger in der Vormontageposition gewährleistet, so dass insbesondere eine unerwünschte Kollision des Scheinwerfers mit dem Seitenteil beim Verbringen des Frontendmoduls in seine Einbaulage verhindert wird. Durch das relativ große Spiel in der Justierposition des Haltearms kann eine angepasste Ausrichtung des Scheinwerfers an angrenzende Seitenteile des Fahrzeugs erfolgen.

Vorzugsweise ist die Lasche in Richtung der Fahrzeuglängsachse verbreitert ausgebildet, wobei der Haltearm in der Vormontageposition in einem schmalen Bereich der Lasche vorfixiert ist. Hierdurch wird beim Verbringen des Frontendmoduls in die Einbaulage eine Kollision des Scheinwerfers mit dem randseitigen Seitenteil des Fahrzeugs sicher vermieden. Ein breites Ende der Ausnehmung ermöglicht eine Ausrichtung des Haltearmes in einer senkrecht zur Fahrzeuglängsmittelebene verlaufenden Justierebene, wobei der Haltearm und der Scheinwerfer in Richtung des Seitenteils bzw. entgegen der Fahrzeuglängsachse verschiebbar und dann endgültig fixierbar ist. Vorteilhaft kann hierdurch auf einfache Weise eine variable Anpassung bzw. Ausrichtung des Haltearms bzw. des Scheinwerfers in Relation zu dem Fahrzeug erfolgen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung eines Frontendmoduls von vorne mit lediglich einem montierten Scheinwerfer,

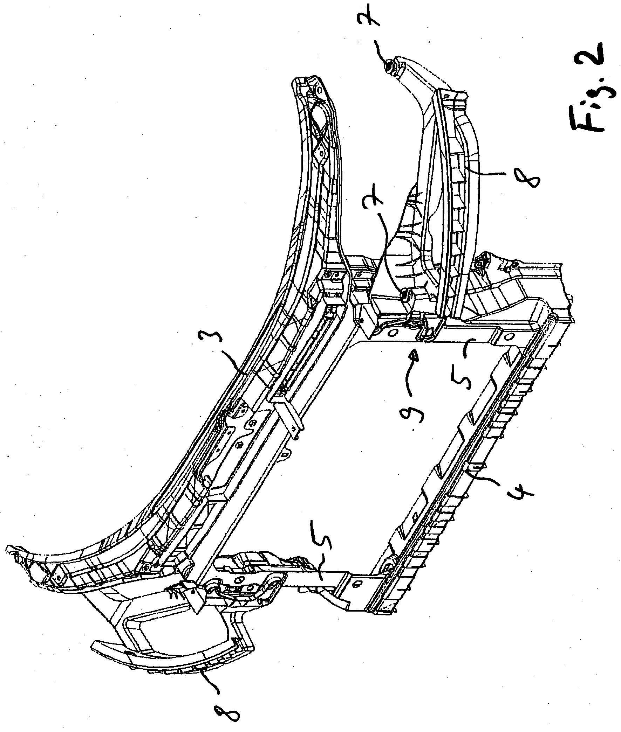

- Figur 2: eine perspektivische Vorderansicht des Frontendmoduls ohne montierte Scheinwerfer,
- Figur 3: eine Vorderansicht des Frontendmoduls in einer Vormontageposition an gegenüberliegenden Enden des Frontendmoduls angeordneter Haltearme, bevor die Scheinwerfer an denselben montiert werden,
- Figur 4: eine Vorderansicht eines Endbereichs des Frontendmoduls, bei der sich der Haltearm in einer Vormontageposition befindet,
- Figur 5: eine Vorderansicht eines Endbereichs des Frontendmoduls, bei der sich der Haltearm in einer Endmontageposition befindet,
- Figur 6: eine vergrößerte Darstellung eines Befestigungsbereiches des Haltearmes in der Vormontageposition, wobei der Haltearm senkrecht zu einer vertikalen Längsmittelebene des Frontendmoduls bzw. des Fahrzeugs um einen Verschiebeweg F (Justierrichtung) in die Endmontageposition verschiebbar gelagert ist,
- Figur 7: eine vergrößerte Darstellung des Befestigungsbereiches des Haltearms in der Endmontageposition und

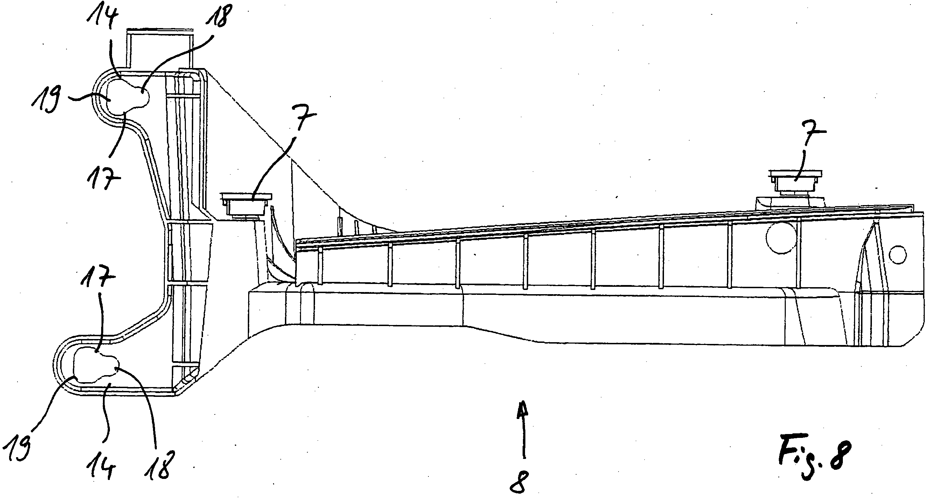

- Figur 8: eine Vorderansicht des Haltearmes.

Ein Frontendmodul 1 für Fahrzeuge erstreckt sich im Wesentlichen über die gesamte Breite des Kraftfahrzeugs und wird in einem vorderen Bereich desselben montiert.

Das Frontendmodul 1 weist einen langgestreckten Montageträger 2 mit einer oberen Querstrebe 3, mit einer unteren Querstrebe 4 sowie mit dieselbe verbindende Vertikalstreben 5 auf. Die Vertikalstreben 5 sind beabstandet zueinander angeordnet und begrenzen gegenüberliegende Seitenbereiche des Montageträgers 2. In diesen Seitenbereichen ist jeweils ein Scheinwerfer 6 angeordnet, der über Haltemittel 7 auf einen Haltearm 8 gelagert ist. Der Haltearm 8 ist über Befestigungsmittel 9 mit der Vertikalstrebe 5 des Montageträgers 2 verbunden.

Der Montageträger 2 ist bezüglich einer vertikalen Längsmittelebene L des Frontendmoduls 1 symmetrisch ausgebildet. Die Scheinwerfer 6 erstrecken sich an gegenüberliegenden Endbereichen des Montageträgers 2 und grenzen in einer Endmontageposition des Haltearmes 8 mit ihren äußeren Randkanten 10 an einem nicht dargestellten Seitenteil (Kotflügel) des Fahrzeugs an.

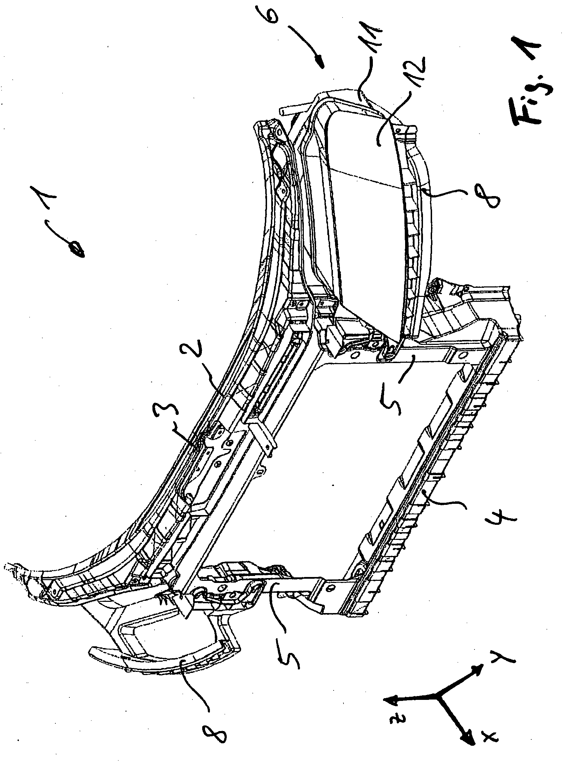

Wie insbesondere aus Figur 1 ersichtlich ist, weist der Scheinwerfer 6 ein topfförmiges Gehäuse 11 auf, dessen vordere Öffnung durch eine transparente Abschlussscheibe 12 abgedeckt ist. Der Querschnitt des Gehäuses 11 bzw. die Höhe und Breite des Gehäuses 11 korrespondiert zu der Fläche der Abschlussscheibe 12.

Neben dem Scheinwerfer 6 können von dem Montageträger 2 weitere Bauteile aufgenommen werden, beispielsweise Bauteile einer Motorkühlungsgruppe oder einer Klimaanlage oder eins Stoßfängerquerträgers, die in einem Bereich zwischen den gegenüberliegenden Querstreben 3 und 4 und den Vertikalstreben 5 angeordnet sein können.

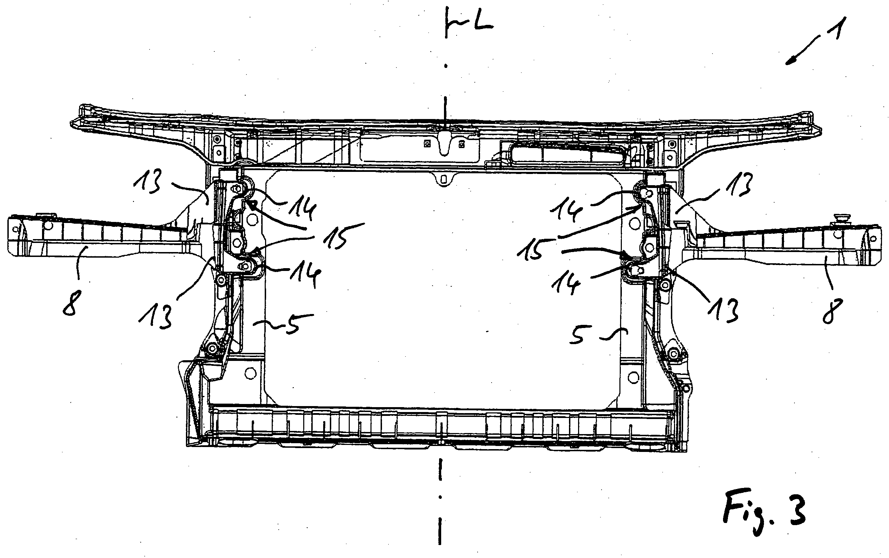

Wie besser aus Figur 3 ersichtlich ist, weist der Haltearm 8 auf einer der Längsmittelebene L zugewandten Seite zwei Haltefinger 13 auf, die endseitig jeweils als eine Lasche 14 ausgebildet sind. Die Lasche 14 dient zusammen mit einer korrespondierenden Befestigungsöffnung 15 der Vertikalstrebe 5 und einem Befestigungsbolzen 16 als Befestigungsmittel 9 zur Befestigung des Haltearms 8 an der Vertikalstrebe 5 des Montageträgers 2.

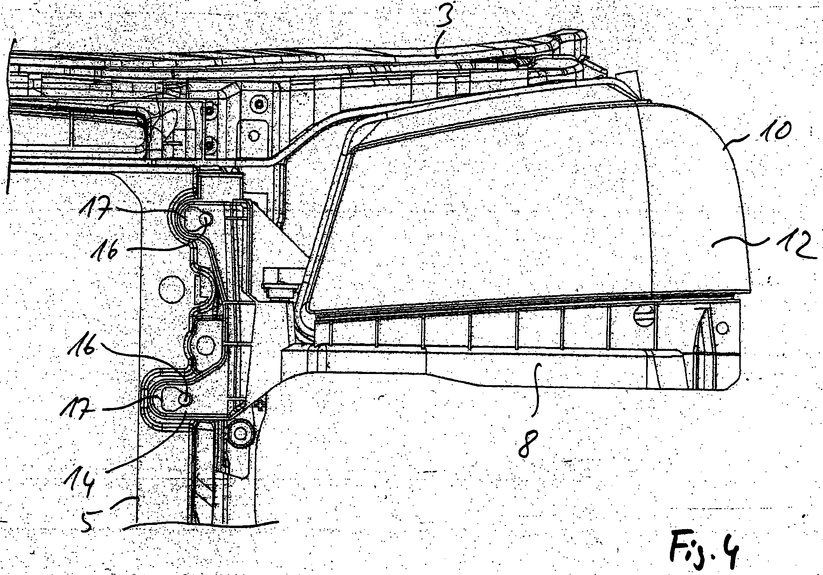

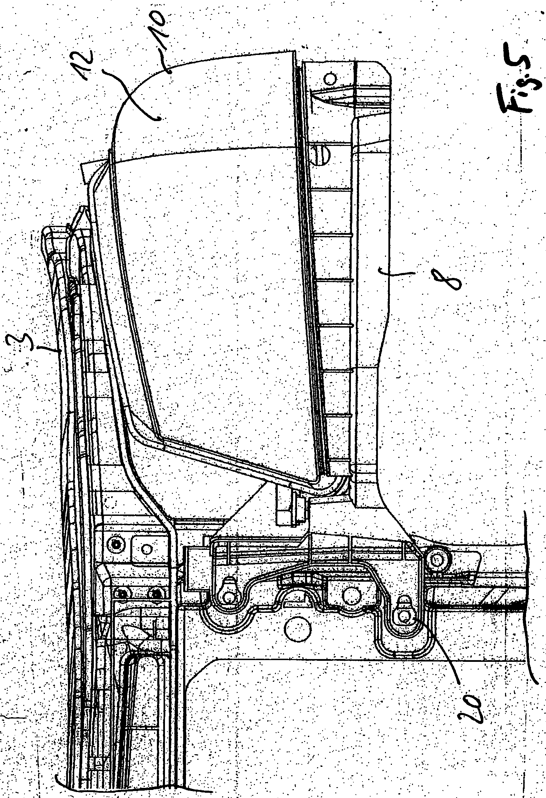

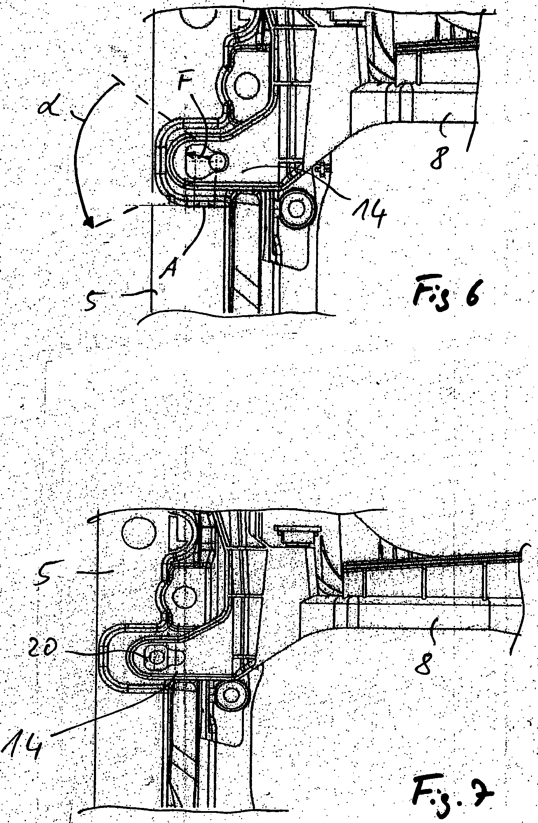

Damit der Haltearm 8 zwischen einer in den Figuren 4, 6 dargestellten Vormontageposition und einer in den Figuren 5, 7 dargestellten Endmontageposition relativ zu dem Montageträger 2 verschiebbar ist, weist die Lasche 14 eine schlüssellochförmige Ausnehmung 17 auf, die ein erstes schmales Ende 18 und ein zweites breites Ende 19 umfasst. Das zweite breite Ende 19 ist auf einer der vertikalen Längsmittelebene L zugewandten Seite und das erste schmale Ende 18 auf einer der Längsmittelebene L abgewandten Seite der Ausnehmung 17 angeordnet, so dass die Ausnehmung 17 in Richtung zu der Längsmittelebene L bzw. der Fahrzeuglängsachse verbreitert ausgebildet ist.

Die Dimension des ersten schmalen Endes 18 ist derart gewählt, dass der Befestigungsbolzen 16 mit geringem Spiel in das erste schmale Ende 18 eingreifen kann. Der Befestigungsbolzen 16, der beispielsweise mit einem Außengewinde in Schraubeingriff mit der Befestigungsöffnung 15 der Vertikalstrebe 5 ist, kann klemmend mit dem ersten schmalen Ende 18 der Ausnehmung 17 verbunden sein. Der Haltearm 8 ist somit lediglich unter Eingreifen des Befestigungsbolzens in das schmale Ende 18 des Haltefingers 13 an dem Montageträger 2 angesetzt, ohne dass eine endgültige Fixierung vorgenommen worden ist.

Das zweite breite Ende 19 der Ausnehmung 17 ist derart gewählt, dass der Befestigungsbolzen 16 mit großem Spiel in die Ausnehmung 17 eingreifen kann und dann der Haltearm 8 so verschoben wird, dass der Befestigungsbolzen 16 klemmend in das schmale Ende 18 der Ausnehmung 17 eingreift. Hierdurch wird eine Vorfixierung des Haltearms 7 in der Vormontageposition bewirkt.

Das zweite breite Ende 19 der Ausnehmung weist eine solche Dimension auf, dass der Befestigungsbolzen 16 senkrecht zu der Längsmittelebene L in einer Justierebene Y-Z-Ebene, die senkrecht zur Fahrzeuglängsachse bzw. Längsmittelebene L verläuft, verschiebbar ist. In einer Justierposition des Haltearmes 8 kann somit eine Ausrichtung des Haltearmes 8 bzw. des Scheinwerfers 6 in Relation zu einem Seitenteil des Fahrzeugs erfolgen.

Wie insbesondere aus Figur 6 ersichtlich ist, weist die Ausnehmung 17 eine solche Länge A auf, dass der Befestigungsbolzen 16 relativ zu der Lasche 14 um einen linearen Führungsweg F verschoben werden kann. Der Befestigungsbolzen 16 kann relativ zu der Lasche 14 aus der Vormontageposition in die Endmontageposition verschoben werden, wobei der Führungsweg F in einem spitzen Öffnungswinkelbereich α in der Justierebene Y-Z verläuft. Der Führungsweg F kann sich somit aus einer Bewegungskomponente in Y-Richtung und Z-Richtung zusammensetzen.

Im Folgenden wird das Verfahren zur Montage des Frontendmoduls 1 im Fahrzeug bzw. an der Fahrzeugkarosserie näher beschrieben. In einem ersten Schritt wird der Scheinwerfer 6 über die Haltemittel 7 an dem Haltearm 8 befestigt. In einem zweiten Schritt wird der Haltearm 8 über die Befestigungsmittel 9 an der Vertikalstrebe 5 des Montageträgers 2 befestigt, wobei der Haltearm 8 in eine Vormontageposition verbracht wird, in der der Befestigungsbolzen 16 am schmalen Ende 18 der Ausnehmung 17 der Lasche 14 eingreift.

Alternativ kann der Haltearm 8 auch zuerst an der Vertikalstrebe 5 in die Vormontageposition gebracht werden und danach der Scheinwerfer 6 an dem Haltearm 8 fixiert werden.

In einem weiteren Schritt wird das Frontendmodul 1 in Richtung der Fahrzeuglängsachse (X-Richtung) von vorne in Richtung des Fahrzeugs bewegt, bis das Frontendmodul 1 eine Einbaulage erreicht hat, in der es über nicht dargestellte Befestigungsmittel an Strukturteilen des Fahrzeugs bzw. der Fahrzeugkarosserie befestigt wird. Dadurch, dass sich der Haltearm in der Vormontageposition befindet, in der der Haltearm 8 bzw. der Scheinwerfer 6 näher in Richtung der Fahrzeuglängsmittelachse angeordnet ist, kann das Frontendmodul 1 in die Einbaulage verbracht werden, ohne dass ein unerwünschter Zusammenstoß (Kollision) des Scheinwerfers 6 mit dem vorhandenen Seitenteil (Kotflügel) des Fahrzeugs erfolgt.

In der Einbaulage des Frontendmoduls 1 kann in einem weiteren Schritt der Haltearm 8 aus der Vormontageposition in eine Justageposition verbracht werden, in der die Lasche 14 relativ zu dem Befestigungsbolzen 16 entlang eines linearen Führungsweges F, der in der Justierebene (Y-Z-Richtung) verlaufen kann, in Bezug auf das Seitenteil des Fahrzeugs ausgerichtet werden kann. Hierzu wird der Haltearm 8 derart in der Justierebene bewegt, bis der Scheinwerfer 6 eine vorgegebene Konturierung zu dem benachbarten Seitenteil des Fahrzeugs aufweist bzw. eine äußere Randkante 10 unmittelbar an das Seitenteil des Fahrzeugs angrenzt. Wenn dies erreicht ist, hat der Haltearm 8 seine Endmontageposition erreicht, so dass die Haltefinger 13 mittels einer mit dem Befestigungsbolzen 16 in Dreheingriff bringbaren Befestigungsmutter 20 an der Vertikalstrebe 5 fixiert wird.

Zusätzlich kann eine Fixierung des Scheinwerfers 6 über nicht dargestellte Befestigungsmittel an der oberen Querstrebe 3 erfolgen. Hierzu sind die Befestigungsmittel an der Oberseite des Scheinwerfers 6 bzw. an der oberen Querstrebe 3 derart ausgebildet, dass eine Verschiebbarkeit in Y- und in Z-Richtung gegeben ist. In diesem Fall kann eine Vorfixierung des Scheinwerfers 6 an der oberen Querstrebe 3 bereits bei Ansetzen des Scheinwerfers 6 an den Haltearm 8 erfolgen.

## Patentansprüche

1. Frontendmodul für Fahrzeuge mit einem Montageträger (2), der mehrere Streben (3, 4, 5) aufweist zur Aufnahme mehrerer Bauteile, wobei ein Bauteil als ein Scheinwerfer (6) ausgebildet ist, der von einem an einer Strebe (5) befestigten Haltearm (8) getragen ist und an den sich auf einer der Fahrzeuglängsachse abgewandten Seite ein Seitenteil des Fahrzeugs anschließt dass der Haltearm (8) an der Strebe (5) über Befestigungsmittel (9) zwischen einer Vormontageposition und einer Justierposition quer zur Fahrzeuglängsachse verschieblich gelagert ist, derart, dass das Frontendmodul (1) in der Vormontageposition des Haltearms (8) mittels einer Verschiebung in Richtung der Fahrzeugslängsachse an dem Fahrzeug positioniert ist, und dass der Haltearm (8) in der Justierposition desselben in mindestens eine Justierrichtung (F), die senkrecht zu der Fahrzeuglängsachse verläuft, festlegbar ist zum Verbringen des Haltearms (8) in die Endmontageposition, **dadurch gekennzeichnet, dass** die Befestigungsmittel (9) zum Verschieben des Haltearms (8) von der Vormontageposition in die Endmontageposition relativ zu der Strebe (5) eine Lasche (14) mit einer schlüssellochförmigen Ausnehmung (17) aufweisen, wobei die Ausnehmung (17) ein erstes schmales Ende (18) und ein zweites breites Ende (19) umfasst und wobei in die Ausnehmung (17) ein Befestigungsbolzen (16) eingreift.

2. Frontendmodul nach Anspruch 1, **dadurch gekennzeichnet, dass** die Befestigungsmittel (9) zum Befestigen des Haltearms (8) an der Strebe (5) des Montageträgers (2) derart ausgebildet sind, dass der Haltearm (8) in der Vormontageposition mit einem geringen Spiel und in der Justierposition mit einem großen Spiel festlegbar ist.

3. Frontendmodul nach einem der Ansprüche 1 oder 2, **dadurch gekennzeichnet, dass** die Ausnehmung (17) der Lasche (14) in Richtung zu der Fahrzeuglängsachse verbreitert ausgebildet ist.

4. Frontendmodul nach einem der Ansprüche 1 bis 3, **dadurch gekennzeichnet, dass** die Ausnehmung (17) an einem ersten schmalen Ende (18) eine solche Dimension aufweist, dass der Befestigungsbolzen (16) mit einem geringen Spiel eingreifbar ist.

5. Frontendmodul nach einem der Ansprüche 1 bis 4, **dadurch gekennzeichnet, dass** die Ausnehmung (17) an einem zweiten breiten Ende (19) eine solche Dimension aufweist, dass der Befestigungsbolzen (16) mit Spiel in einer senkrecht zur Fahrzeuglängsachse verlaufenden Justierebene relativ zu der Lasche (14) bewegbar ist.

6. Frontendmodul nach einem der Ansprüche 1 bis5, **dadurch gekennzeichnet, dass** die Lasche (14) einstückig mit dem Haltearm (8) verbunden ist.

7. Frontendmodul nach einem der Ansprüche 1 bis 6, **dadurch gekennzeichnet, dass** die Befestigungsmittel (9) eine an der Strebe (5) des Montageträgers (2) angeordnete Befestigungsöffnung (15) aufweist, zu der ein Teilbereich (18, 19) der Lasche (14) fluchtet.

8. Frontendmodul nach einem der Ansprüche 1 bis 7, **dadurch gekennzeichnet, dass** der Montageträger (2) symmetrisch zu einer vertikalen Längsmittelebene (L) des Fahrzeugs ausgebildet ist mit quer zu der vertikalen Längsmittelebene verlaufenden Querstreben (3, 4) und parallel zu der vertikalen Längsmittelebene (L) verlaufenden Vertikalstreben (5).

9. Frontendmodul nach einem der Ansprüche 1 bis 8, **dadurch gekennzeichnet, dass** die Befestigungsöffnung (15) des Befestigungsmittels (9) an der Vertikalstrebe (5) des Montageträgers (2) angeordnet ist.

## Claims

1. A front module for vehicles, including a mounting bracket (2) which has several struts (3, 4, 5) for receiving several components, wherein one component is designed as a headlight (6) which is supported by a holding arm (8) fastened to a strut (5) and which is adjoined by a side part of the vehicle on a side facing away from the longitudinal axis of the vehicle, wherein the holding arm (8) is supported on the strut (5) by means of fastening means (9) so as to be slidable, transversely to the longitudinal axis of the vehicle, between a pre-assembled position and an adjustment position, such that, in the pre-assembled position of the holding arm (8), the front module (1) is positioned on the vehicle by sliding it in the direction of the longitudinal axis of the vehicle, and that the holding arm (8), in the adjustment position thereof, can be locked in at least one adjustment direction (F) which extends at right angles to the longitudinal axis of the vehicle in order to move the holding arm (8) to the final assembly position, **characterized in that**, for sliding the holding arm (8) relative to the strut (5) from the pre-assembled position to the final assembly position, the fastening means (9) have a tab (14) including a keyhole-shaped recess (17), wherein the recess (17) comprises a first narrow end (18) and a second wide end (19) and wherein a fastening bolt (16) engages the recess (17).

2. The front module according to claim 1, **characterized in that** the fastening means (9) for fastening the holding arm (8) to the strut (5) of the mounting bracket (2) are designed such that the holding arm (8) can be locked with a little play in the pre-assembled position and with much play in the adjustment position.

3. The front module according to either of claims 1 or 2, **characterized in that** the recess (17) of the tab (14) is designed wider in the direction towards the longitudinal axis of the vehicle.

4. The front module according to any one of claims 1 to 3, **characterized in that**, on a first narrow end (18), the recess (17) has such a dimension that it can be engaged by the fastening bolt (16) with a little play.

5. The front module according to any one of claims 1 to 4, **characterized in that**, on a second wide end (19), the recess (17) has such a dimension that the fastening bolt (16) can be moved, with a play, relative to the tab (14) in an adjustment plane extending at right angles to the longitudinal axis of the vehicle.

6. The front module according to any one of claims 1 to 5, **characterized in that** the tab (14) is integrally connected to the holding arm (8).

7. The front module according to any one of claims 1 to 6, **characterized in that** the fastening means (9) have a fastening aperture (15) arranged on the strut (5) of the mounting bracket (2), which aperture is flush with a partial area (18, 19) of the tab (14).

8. The front module according to any one of claims 1 to 7, **characterized in that** the mounting bracket (2) is designed symmetrical to a vertical longitudinal centre plane (L) of the vehicle, with transverse struts (3, 4) extending transversely to the vertical longitudinal centre plane and vertical struts (5) extending parallel to the vertical longitudinal centre plane (L).

9. The front module according to any one of claims 1 to 8, **characterized in that** the fastening aperture (15) of the fastening means (9) is arranged on the vertical strut (5) of the mounting bracket (2).

## Revendications

1. Bloc avant pour véhicules automobiles, avec un support de montage (2), qui présente plusieurs entretoises (3, 4, 5) destinées à recevoir plusieurs composants, l'un des composant étant un phare (6) porté par un bras de support (8) fixé sur une entretoise (5), et auquel se raccorde une partie latérale du véhicule automobile, sur un côté opposé à l'axe longitudinal du véhicule automobile, sachant que le bras de support (8) est monté sur l'entretoise (5) par l'intermédiaire de moyens de fixation (9) et peut être déplacé transversalement par rapport à l'axe longitudinal du véhicule automobile, entre une position de montage préliminaire et une position d'ajustage, de sorte que le bloc avant (1) se trouve positionné sur le véhicule, dans la position de montage préliminaire, au moyen d'un déplacement en direction de l'axe longitudinal du véhicule automobile, et que le bras de support (8) puisse être fixé, dans la position d'ajustage de celui-ci, dans au moins une direction d'ajustage (F) qui s'étend perpendiculairement à l'axe longitudinal du véhicule automobile, afin que le bras de support (8) soit amené dans sa position de montage finale, **caractérisé en ce que**, pour le déplacement du bras de support (8) de la position de montage préliminaire à la position de montage finale par rapport à l'entretoise (5), les moyens de fixation (9) présentent une patte (14) avec un évidement (17) en forme de trou de serrure, sachant que l'évidement (17) comprend une première extrémité étroite (18) et une deuxième extrémité large (19) et sachant qu'un organe de fixation (16) s'engage dans l'évidement (17).

2. Bloc avant selon la revendication 1, **caractérisé en ce que** les moyens de fixation (9), pour la fixation du bras de support (8) sur l'entretoise (5) du support de montage (2), sont configurés de telle manière que le bras de support (8), dans la position de montage préliminaire, puisse être fixé avec un faible jeu et, dans la position d'ajustage avec un grand jeu.

3. Bloc avant selon revendication 1 ou 2, **caractérisé en ce que** l'évidement (17) de la patte (14) est élargi dans la direction orientée vers l'axe longitudinal du véhicule automobile.

4. Bloc avant selon l'une des revendications 1 à 3, **caractérisé en ce que** l'évidement (17) présente, à une première extrémité étroite (18), une dimension telle que l'organe de fixation (16) puisse s'engager avec un faible jeu.

5. Bloc avant selon l'une des revendications 1 à 4, **caractérisé en ce que** l'évidement (17) présente, à une deuxième extrémité large (19), une dimension telle que l'organe de fixation (16), pat rapport à la patte (14), puisse être déplacé avec jeu sur un plan d'ajustage s'étendant perpendiculairement à l'axe longitudinal du véhicule automobile.

6. Bloc avant selon l'une des revendications 1 à 5, **caractérisé en ce que** la patte (14) est reliée d'une pièce au bras de support (8).

7. Bloc avant selon l'une des revendications 1 à 6, **caractérisé en ce que** les moyens de fixation (9) présentent un orifice de fixation (15), disposé sur l'entretoise (5) du support de montage (2), orifice avec lequel une zone partielle (18, 19) de la patte (14) est en alignement.

8. Bloc avant selon l'une des revendications 1 à 7, caractérisé en ce le support de montage (2) est configuré symétriquement par rapport à un plan médian, longitudinal, vertical (L) du véhicule automobile, avec des entretoises transversales (3, 4) s'étendant perpendiculairement au plan médian, longitudinal, vertical (L) et des entretoises verticales /5) s'étendant parallèlement au plan médian, longitudinal, vertical (L).

9. Bloc avant selon l'une des revendications 1 à 8, **caractérisé en ce que** l'orifice de fixation (15) du moyen de fixation (9) est disposé sur l'entretoise verticale (5) du support de montage (2).
